# EUROPÄISCHE PATENTSCHRIFT

(11) **EP 4 335 340 B1**
(45) Veröffentlichungstag und Bekanntmachung des Hinweises auf die Patenterteilung: **26.02.2025**
(21) Anmeldenummer: 23192349.1
(22) Anmeldetag: 21.08.2023
(51) Int. Cl.: A47L 7/00

(54) **BOHRSTAUBSAUGER**
DRILLING VACUUM CLEANER
ASPIRATEUR-PERÇEUSE

(30) Priorität: 07.09.2022 DE 102022003296
(43) Veröffentlichungstag der Anmeldung: 13.03.2024
(73) Patentinhaber: Meyer, Werner, 86720 Nördlingen (DE)
(72) Erfinder: Meyer, Werner, 86720 Nördlingen (DE)
(74) Vertreter: Pa-Munk

(56) Entgegenhaltungen:
- DE-A1- 102009 054 968
- DE-U1- 202020 106 108

## Beschreibung

Die Erfindung betrifft einen Bohrstaubsauger mit einem topfförmigen Gehäuse, durch das ein rotierend antreibbarer Bohrer axial durchführbar ist, und mit einem im Gehäuse axial verschiebbar angeordneten, mit einem bohrerseitigen Anschlag zusammenwirkenden Kolbenaggregat, das eine Saugzuggebläseeinrichtung enthält und mittels einer von ihm übergriffenen Feder an einen gehäuseseitigen Anschlag anstellbar ist.

Eine Anordnung dieser Art ist aus der DE 20 2020 106 108 U1 bekannt. Bei dieser bekannten Anordnung ist das Kolbenaggregat drehbar gelagert und wird mittels des hiermit zusammenwirkenden Bohrers oder des diesen aufnehmenden Spannfutters rotierend angetrieben. Das Kolbenaggregat ist dabei gleichzeitig als Saugzuggebläse ausgebildet, das dementsprechend durch den hiermit zusammenwirkenden Bohrer beziehungsweise das Spannfutter angetrieben wird. Die beim Bohren eines Lochs benutzten Drehzahlen reichen jedoch für die Erzielung einer ausreichenden Saugkraft des hier vorgesehenen Saugzuggebläses nicht aus. Zudem ist die Drehzahl vom Durchmesser des Bohrers abhängig und daher von Fall zu Fall unterschiedlich. Die bekannte Anordnung erweist sich daher als nicht zuverlässig genug.

Hiervon ausgehend ist es daher die Aufgabe der vorliegenden Erfindung, eine Anordnung eingangs erwähnter Art mit einfachen und kostengünstigen Mitteln so zu verbessern, dass eine zuverlässige Funktionsweise gewährleistet ist.

Diese Aufgabe wird erfindungsgemäß dadurch gelöst, dass im Kolbenaggregat wenigstens ein mit einem eigenen Antriebsmotor versehenes Saugzuggebläse und ein mit einer Ladebuchse versehener, jedem vorgesehenen Saugzuggebläse zugeordneter Energiespeicher vorgesehen sind.

Diese Maßnahmen stellen sicher, dass die Drehzahl und damit die Leistung jedes auf dem Kolbenaggregat, das zweckmäßig gegen Verdrehen gesichert ist, aufgenommenen Saugzuggebläses von der Drehzahl des Bohrers völlig unabhängig sind und immer mit der optimalen Drehzahl laufen können, so dass eine vom Bohrer unabhängige, praktisch konstante Saugleistung erreicht wird und damit eine hohe Funktionssicherheit. Der vorzugsweise als Akku ausgebildete Energiespeicher kann dabei einfach so dimensioniert sein, dass die gespeicherte Ladung für eine gewünschte Anzahl von Bohrvorgängen ausreicht.

Vorteilhafte Ausgestaltungen und zweckmäßige Fortbildungen der übergeordneten Maßnahmen sind in den Unteransprüchen angegeben.

So kann das zweckmäßig gegen Verdrehen gesicherte Kolbenaggregat vorteilhaft eine dem bohrerseitigen Anschlag zugeordnete, drehbar gelagerte Anlaufbuchse aufweisen. Hierdurch wird sichergestellt, dass Relativbewegungen zwischen dem bohrerseitigen Anschlag und dem als Gegenanschlag fungierenden Kolbenaggregat vermieden werden, was eine schonende Betriebsweise ergibt.

In weiterer Fortbildung der übergeordneten Maßnahmen kann vorgesehen sein, dass jedes Saugzuggebläse und der vorzugsweise als Akku ausgebildete Energiespeicher durch eine Steuereinrichtung miteinander gekoppelt sind, der ein nach oben vorspringender Tastschalter zum Ein- und Ausschalten jedes Saugzuggebläses zugeordnet ist, wozu der Tastschalter mit dem vorzugsweise als Kragen einer auf das Gehäuse aufschraubbaren Buchse ausgebildeten gehäuseseitigen Anschlag zusammenwirkt. Der Tastschalter kann so ausgebildet sein, dass er jedes Saugzuggebläse abschaltet, sobald er zusammen mit dem Kolbenaggregat am durch den Kragen der auf das Gehäuse aufschraubbaren Buchse gebildeten gehäuseseitigen Anschlag anläuft und einschaltet, sobald er zusammen mit dem Kolbenaggregat vom Anschlag entfernt wird. Dies ergibt eine energiesparende Bauweise.

In weiterer Fortbildung der übergeordneten Maßnahmen kann vorgesehen sein, dass das Kolbenaggregat mit jedem Saugzuggebläse zugeordneten Ein- und Auslassöffnungen versehen ist und dass einlassseitig ein Luftfilter vorgesehen ist, das zweckmäßig durch einen an das Kolbenaggregat von unten lösbar ansetzbaren topfartigen Deckel in Anlage am lufteinlassseitigen Bereich des Kolbenaggregats gehalten wird, der einen dem Filter vorgeordneten Stauraum enthält, der über spaltförmige Strömungswege mit dem Raum oberhalb des Bodens des Gehäuses kommuniziert. Das Luftfilter stellt sicher, dass die ausgeblasene Luft gefiltert ist und der Bohrstaub im Gehäuse zurückbleibt. In dem dem Luftfilter vorgeordneten Stauraum kann sich der durch die Luftströmung herausgeführte Bohrstaub niederschlagen, wobei die Strömungswege so gestaltet werden können, dass auch bei einem Umstürzen des Bohrstaubsaugers kein Bohrstaub herausfallen kann. Die Aufnahme des Luftfilters auf dem lösbar am Kolbenaggregat anbringbaren Deckel ermöglicht in vorteilhafter Weise eine zuverlässige und sichere Platzierung sowie einen einfachen und schnellen Wechsel. Die genannten Maßnahmen ergeben daher eine hohe Bedienungsfreundlichkeit und Störungsfreiheit.

Eine weitere bevorzugte Fortbildung der übergeordneten Maßnahmen kann darin bestehen, dass die das Kolbenaggregat abstützende Feder als Zylinderfeder mit einem an den Innendurchmesser des Gehäuses angepassten Außendurchmesser ausgebildet und von einem aus einem in sich beweglichen, luftundurchlässigen Material bestehenden Mantel umfasst ist und dass die Feder zwischen der Unterseite des Kolbenaggregats und dem gegenüberliegenden, einen Ausgang für den Bohrer aufweisenden Gehäuseboden eingespannt ist. Die genannte Feder ergibt zusammen mit dem sie umfassenden Mantel einen Staubauffangraum und stellt zudem in Folge ihrer Vorspannung sicher, dass das Kolbenaggregat bei Wegfall einer vom Bohrer ausgeübten axialen Verschiebekraft zuverlässig an den gehäuseseitigen Anschlag zurückgestellt wird, womit auch der Tastschalter der Steuereinrichtung zuverlässig betätigt werden kann.

Zweckmäßig kann der Gehäuseboden mit einer äußeren, einen zwischen zwei Peripheriebereichen durchgehenden Kanal bildenden Aussparung versehen sein.

Hierdurch wird die Handhabung sehr erleichtert, wenn beispielsweise im Bereich von auf Putz verlegten Leitungen gearbeitet werden muss, die hier im durch die Aussparung gebildeten Kanal verlaufen können.

Eine weitere Fortbildung der übergeordneten Maßnahmen kann darin bestehen, dass im Bereich des dem Bohrer zugeordneten Ausgangs des Gehäusebodens radiale Bohrstaubansaugkanäle vorgesehen sind. Diese gewährleisten eine zuverlässige Kanalisierung des angesaugten Bohrstaubs. Zweckmäßig können die Bohrstaubansaugkanäle einer in den Gehäuseboden einschraubbaren Buchse zugeordnet sein, welche den dem Bohrer zugeordneten Ausgang aufweist, von dem die Bohrstaubansaugkanäle bildende, radiale Stichbohrungen abgehen. Die Verwendung einer in den Gehäuseboden einschraubbaren, die Bohrstaubansaugkanäle enthaltenden Buchse ermöglicht eine einfache Anpassung an die Verhältnisse des Einzelfalls, indem mehrere Buchsen mit unterschiedlichen Bohrstaubansaugkanälen vorgesehen sind, die wahlweise zum Einsatz kommen können.

Eine weitere, besonders zu bevorzugende Fortbildung der übergeordneten Maßnahmen kann darin bestehen, dass das Gehäuse lösbar auf einer zugeordneten Basiseinrichtung aufnehmbar ist, die an der mit dem Bohrer zu bearbeitenden Unterlage anbringbar ist und eine auf den Mittelpunkt des zu bohrenden Lochs gerichtete, vorzugsweise als Laserstrahl ausgebildete Justiereinrichtung aufweist. Diese Maßnahmen erleichtern die Handhabung und erhöhen die Genauigkeit. Die Basiseinrichtung kann bei abgenommenem Gehäuse an der Unterlage angesetzt werden, was eine gute Sicht auf den durch die Justiereinrichtung markierten Bohrungsmittelpunkt ermöglicht. Danach kann das Gehäuse aufgesetzt werden, wobei eine zugeordnete Fassung sicherstellt, dass der Bohrer immer auf den durch die Justiereinrichtung markierten Mittelpunkt trifft.

Zur Erleichterung der Handhabung kann vorgesehen sein, dass die Basiseinrichtung mit einer Evakuiereinrichtung versehen und hiermit auf der zugeordneten Unterlage festsaugbar ist.

Weitere vorteilhafte Ausgestaltungen und zweckmäßige Fortbildungen der übergeordneten Maßnahmen sind aus der nachstehenden Beispielsbeschreibung anhand der Zeichnung entnehmbar.

In der nachstehend beschriebenen Zeichnung zeigen:
- Figur 1: einen Vertikalschnitt durch einen erfindungsgemäßen, in Ruhestellung sich befindenden Bohrstaubsauger mit zugeordneter Basiseinrichtung,
- Figur 2: einen Vertikalschnitt durch den erfindungsgemäßen Bohrstaubsauger im Betrieb und
- Figur 3: eine bevorzugte Alternative mit einer vereinfachten Anordnung des Luftfilters.

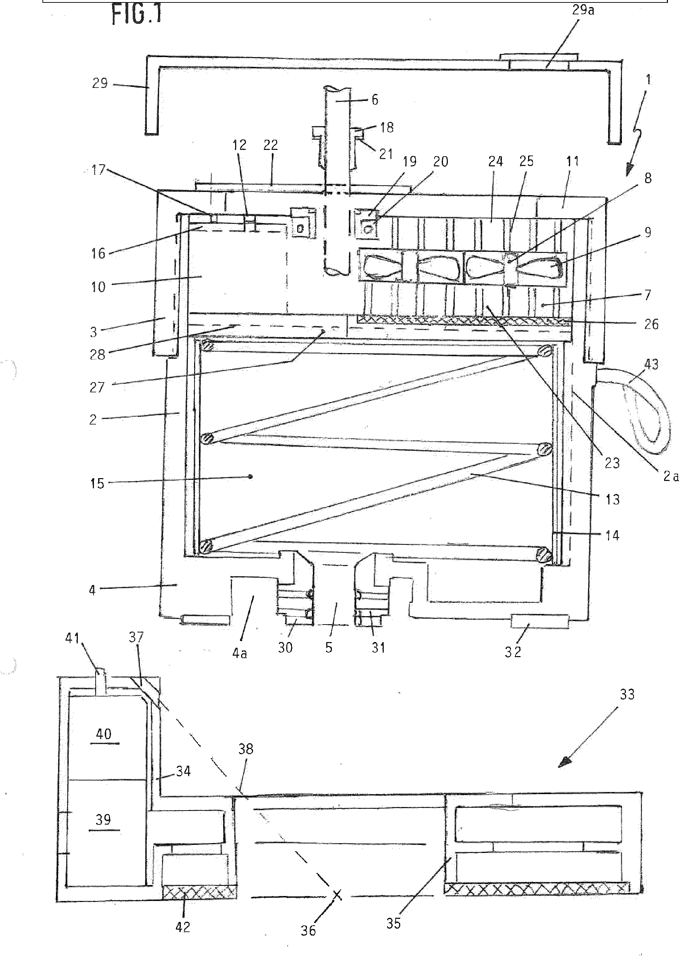

Der grundsätzliche Aufbau der den Figuren 1 bis 3 zugrunde liegenden Anordnung stimmt überein. Für einander entsprechende Teile finden daher die gleichen Bezugsziffern Verwendung. Der den Figuren 1 bis 3 zugrunde liegende Bohrstaubabsauger 1 besitzt ein topfförmiges Gehäuse 2, das oben offen und mit einer auf den oberen Rand aufschraubbaren, einen Kragen aufweisenden Muffe 3 versehen ist und das unten durch einen Boden 4 verschlossen ist, der eine Auslassöffnung 5 für einen durch den Bohrstaubsauger 1 axial durchführbaren, in Figur 1 lediglich durch seinen oberen Endbereich angedeuten Bohrer 6 aufweist. Der Boden 4 kann mit einer äußeren, zwischen zwei Peripheriebereichen durchgehenden, nach unten offenen Aussparung 4a versehen sein, die einen Kanal zum Durchführen von wandseitig vorhandenen Erhöhungen, wie auf Putz verlegten Leitungen etc., bilden kann. Zum Absaugen des beim Bohren eines Lochs in eine Gebäudewand etc. entstehenden Bohrstaubs ist eine einen ausreichenden Saugzug erzeugende Einrichtung vorgesehen.

Hierzu ist im Gehäuse 2 ein Kolbenaggregat 7 in axialer Richtung verschiebbar angeordnet, das wenigstens einen, hier zwei nebeneinander angeordnete, jeweils mit einem eigenen Antriebsmotor 8 versehene Saugzuggebläse 9 und einen diesen zugeordneten Energiespeicher 10 enthält. Dieser kann als Akku ausgebildet sein, der mit einer von oben radial innerhalb des Kragens 11 der Muffe 3 zugänglichen Ladebuchse 12 zum Aufladen versehen ist. Das in axialer Richtung verschiebbar im Gehäuse 2 angeordnete Kolbenaggregat 7 liegt mit seiner Unterseite auf einer unterhalb hiervon im Gehäuse 2 angeordneten, es untergreifenden Feder 13 auf und wird hiervon mit Vorspannung an den Kragen 11 der auf das Gehäuse 2 aufschraubbaren Muffe 3 angestellt, die praktisch einen verstellbaren oberen Anschlag für das Kolbenaggregat 7 bildet.

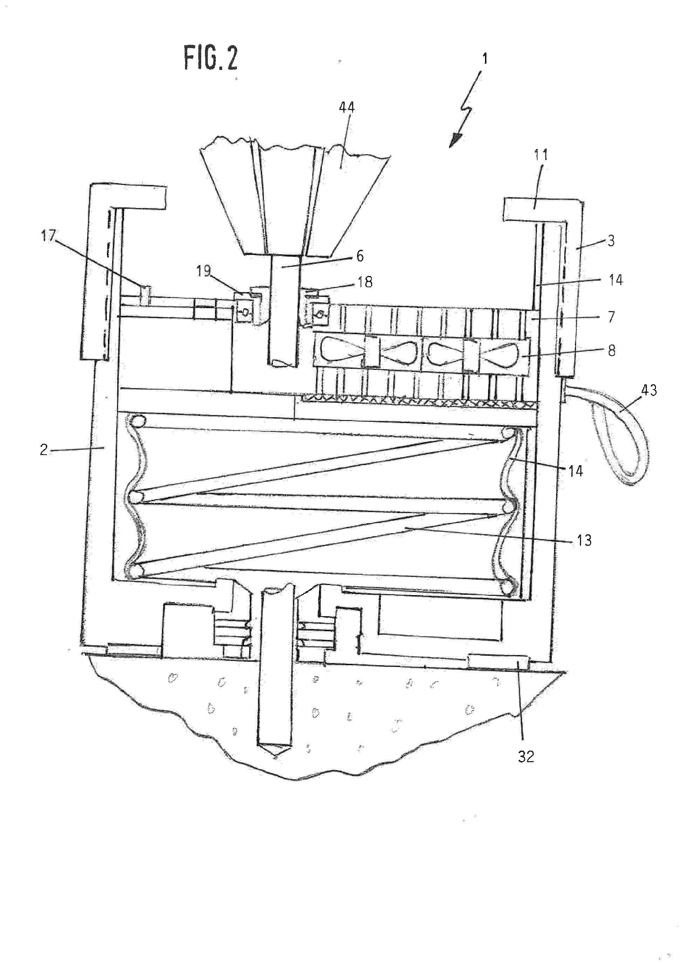

Die Feder 13 ist als nach Art einer Sprungfeder mit großer Steigung gestaltete Zylinderfeder mit einem an den Innendurchmesser des Gehäuses 2 angepassten Außendurchmesser ausgebildet, die mit ihrem unteren Ende an der Innenseite des Bodens 4 des Gehäuses 2 und mit ihrem oberen Ende an der Unterseite des Kolbenaggregats 7 abgestützt ist, so dass dieses bei Wegfall einer nach unten gerichteten Kraft zuverlässig von einer der Figur 2 zugrundeliegenden, vom durch den Kragen 11 gebildeten Anschlag abgehobenen Arbeitsstellung in die der Figur 1 zugrunde liegende Anschlagstellung zurückgeschoben wird. Die Feder 13 hat hierzu die geeignete Vorspannung. Die Feder 13 kann von einem Mantel 14 umfasst sein, der aus einem in sich beweglichen, luftundurchlässigen Material besteht. Auf diese Weise wird eine in radialer Richtung durch den Mantel 14 und in axialer Richtung durch den Boden 4 des Gehäuses 2 und das Kolbenaggregat 7 begrenzte Kammer 15 gebildet, die bei einer Ausführung gemäß Figur 1 und 2 als Staubbehälter fungieren kann. Im Betrieb, das heißt, wenn das Kolbenaggregat 7 durch den Bohrer 6 in Vorschubrichtung des Bohrers 6 von dem als Anschlag fungierenden Kragen 11 wegbewegt wird, werden die Feder 13 gestaucht und der Mantel 14 ziehharmonikaartig gefaltet, wie in Figur 2 schematisch angedeutet ist. Dadurch bleibt die geschlossene Kammer 15 erhalten. Diese wird lediglich etwas verkleinert.

Zur elektrischen Kopplung des Energiespeichers 10 mit dem zugeordneten Antriebsmotor 8 jedes Saugzuggebläses 9 kann eine auf einer Platine 16 aufgenommene Steuereinrichtung vorgesehen sein, die einen im radialen Bereich des als Anschlag fungierenden Kragens 11 der Muffe 3 angeordneten, nach oben ausfahrbaren Tastschalter 17 aufweist. Dieser kann so ausgebildet sein, dass er die Saugzuggebläse 8 abschaltet, wenn er durch Anlaufen an den Kragen 11 gedrückt wird und umgekehrt. Der Figur 1 liegt die Anschlagstellung zugrunde, in der die Saugzuggebläse 8 abgeschaltet sind und daher keine Energie verbrauchen. Die Figur 2 zeigt die Arbeitsstellung, bei der der Tastschalter 17 frei ist und die Saugzuggebläse 8 daher laufen.

Beim Bohren wird das Kolbenaggregat 7, das durch eine axiale Führung 2a gegen Verdrehen im Gehäuse 2 gesichert ist, durch den es durchsetzenden Bohrer 6 entgegen der Kraft der Feder 13 niedergedrückt und damit gemäß Figur 2 vom als Anschlag fungierenden Kragen 11 wegbewegt. Im dargestellten Beispiel ist der Bohrer 6 hierzu mit einem durch einen aufgezogenen oder aufgeklebten Flanschring oder dergleichen gebildeten Anschlag 18 versehen, der bei einer Vorschubbewegung des Bohrers 6 mit dem Kolbenaggregat 7 zusammenwirkt. Dieses kann hierzu mit einer dem Anschlag 18 zugeordneten Anlaufbüchse 19 versehen sein, die frei drehbar im Kolbenaggregat 7 gelagert sein kann, wie durch Kugellager 20 angedeutet ist. Zur Vermeidung einer schleifenden Relativbewegung können der den Anschlag 18 bildende Flanschring und die Anlaufbüchse 19 mit einander zugeordneten, in der der Figur 1 zugrundeliegenden Mitnahmestellung in gegenseitigen Eingriff kommenden Verzahnungen 21 versehen sein.

Bei entferntem Bohrer 6, das heißt im Stillstand des Bohrstaubsaugers 1, kann die Durchführausnehmung der Anlaufbüchse 19 durch einen auf dem Kragen 11 der Muffe 3 drehbar angeordneten Drehschieber 22 abgedeckt werden, um das Eindringen von Staub und Unrat von außen in das Innere des Bohrstaubabsaugers 1 zu vermeiden.

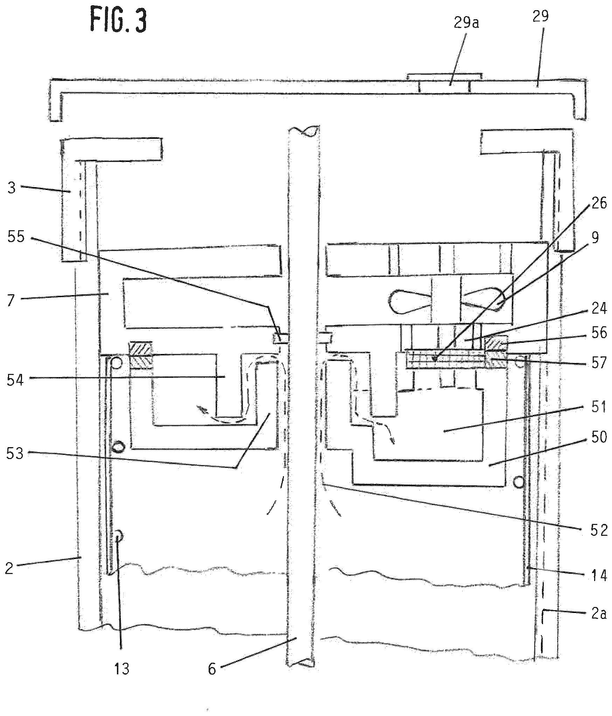

Das Kolbenaggregat 7 besitzt seinen Saugzuggebläsen 8 zugeordnete Ein- und Auslassöffnungen 23, 24, denen jeweils eine rostartige Eingriffssicherung 25 zugeordnet sein kann. Der unteren Einlassöffnung ist ein Luftfilter 26 zugeordnet. Dieses kann gemäß Figur 1 und 2 auf einer Schublade 27 aufgenommen sein, die mittels einer quer zur Längsachse des Gehäuses 2 verlaufenden Schiebeführung 28 an der Unterseite des Kolbenaggregats 7 verschiebbar angebracht sein kann. Eine bevorzugte Alternative, die ohne Schublade auskommt, ist in Figur 3 gezeigt, die weiter unten beschrieben wird.

Der beim Bohren eines Lochs in einer Gebäudewand etc. entstehende, durch die Saugzuggebläse 9 angesaugte Staub schlägt sich im Beispiel gemäß Figur 1 und 2 in dem durch den Mantel 14 der Feder 13 radial begrenzten Raum nieder und muss von Zeit zu Zeit hieraus entfernt werden. Hierzu kann der Raum 15 geöffnet und ausgeleert werden. Zweckmäßig kann der Raum 15 jedoch mittels eines Staubsaugers abgesaugt werden. Um dies zu ermöglichen, kann eine nach Entfernen des Bohrers 6 auf die Muffe 3 aufsteckbare Verschlusskappe 29 vorgesehen sein, die eine verschließbare Öffnung 29a zum Ansetzen eines Staubsaugerrohrs etc. aufweisen kann. Bei diesem Absaugvorgang befindet sich der Drehschieber 22 natürlich in seiner Öffnungsstellung.

Beim Bohren wird der Bohrstaub über die im Bereich des Bodens 4 des Gehäuses 2 vorgesehene, dem Bohrer 6 zugeordnete Auslassöffnung 5 angesaugt. Diese kann, wie im dargestellten Beispiel, einer in eine zugeordnete Öffnung des Bodens 4 eingeschraubten Büchse 30 zugeordnet sein, die zweckmäßig mit von ihrer den Auslass 5 bildenden Bohrung radial abgehenden, sternförmig angeordneten Stichbohrungen zur Bildung von Bohrstaubansaugkanälen 31 versehen ist.

In einfachen Fällen kann der erfindungsgemäße Bohrstaubsauger, wie Figur 2 zeigt, direkt auf die mittels des Bohrers 6 zu bearbeitende Wand aufgesetzt werden. Das Gehäuse 2 ist hierzu bodenseitig mit Anlagepolstern 32 versehen, um eine schonende Anlage zu ermöglichen. In Fällen dieser Art erfordert es jedoch größeres Geschick, um eine Bohrung genau zu positionieren.

Zur Erleichterung der Handhabung kann daher, wie Figur 1 zeigt, eine an der zu bearbeitenden Wand ansetzbare Basiseinrichtung 33 vorgesehen sein, die mit einer Fassung 34 für das hiermit in lösbaren Eingriff bringbare Gehäuse 2 des Bohrstaubsaugers 1 versehen ist. Die Basiseinrichtung 33 ist mit einer dem Auslass 5 des Bohrstaubsaugers 1 zugeordneten, vergleichsweise großen Durchgangsöffnung 35 versehen, innerhalb welcher der Mittelpunkt 36 der herzustellenden Bohrung liegt. Die dem Gehäuse 2 zugeordnete Fassung 34 ist dabei so ausgebildet, dass der den mit seinem Gehäuse 2 zum Eingriff mit der Fassung 34 gebrachten Bohrstaubsauger 1 durchgreifende Bohrer 6 auf den Mittelpunkt 36 trifft. Zum Anzeigen des Mittelpunkts 36 kann die Basiseinrichtung 33 zweckmäßig mit einer Justiereinrichtung versehen sein. Diese kann, wie in Figur 1 angedeutet ist, als Lasereinrichtung ausgebildet sein, die eine Laserkanone 37 aufweist, die einen Laserstrahl 38 aussendet, der genau auf den Mittelpunkt 36 trifft.

Die Basiseinrichtung 33 wird zweckmäßig unverrückbar an der zugeordneten Unterlage festgelegt. Hierzu kann die Basiseinrichtung 33 mit einer geeigneten Evakuiereinrichtung zum Festsaugen versehen sein. Vorteilhaft enthält die Basiseinrichtung 33 dabei ein einer inneren Kammer zugeordnetes Evakuiergebläse 39 mit eigenem Antriebsmotor, dem ein zweckmäßig wieder als Akku ausgebildeter Energiespeicher 40 sowie ein Tippschalter 41 zum Ein- und Ausschalten zugeordnet sind. Das bei aktiviertem Evakuiergebläse 39 erzeugte Vakuum wirkt innerhalb des Hohlraums der zweckmäßig als Hohlkörper ausgebildeten, die genannte innere Kammer bildenden Basiseinrichtung 33, die anlageseitig, das heißt in Figur 1 unten, mit durch jeweils eine Ringdichtung 42 abgedichteten Saugöffnungen versehen ist.

Die Festlegung des Gehäuses 2 des Bohrstaubsaugers 1 in der Fassung 34 der Basiseinrichtung 33 kann als Steckverschluss ausgebildet sein. Zweckmäßig kann zur Erleichterung der Handhabung ein Magnetverschluss vorgesehen sein. Hierzu können beidseits Magnetringe vorgesehen sein, die bei Annäherung einander anziehen.

Um bei der Anbringung der Basiseinrichtung 33 auf der zugeordneten Unterlage den Bohrstaubsauger 1 nicht aus der Hand legen zu müssen, kann das Gehäuse 2 mit einer eine Halteschlaufe bildenden Kordel 43 versehen sein, die es ermöglicht, den Bohrstaubsauger 1 an einem Handgelenk anzuhängen, so dass die betreffende Hand zwar zum Arbeiten frei ist, der Bohrstaubsauger 1 aber immer zur Hand ist, was die Handhabung sehr erleichtert. In einfachen Fällen kann, wie oben schon angedeutet wurde, auf die Verwendung der Basiseinrichtung 33 verzichtet werden und das Gehäuse 2 des Bohrstaubsaugers 1 direkt auf der mittels des Bohrers 6 zu bearbeitenden Unterlage aufgesetzt werden, wie Figur 2 zeigt.

In der Darstellung gemäß Figur 2 ist, wie oben schon erwähnt, der bohrerseitige Anschlag 18 des hier in ein Bohrfutter 44 einer Handbohrmaschine etc. eingespannten Bohrers 6 im Eingriff mit der Anlaufbuchse 19 des Kolbenaggregats 7, das hier durch den in axialer Richtung bewegten Bohrer 6 von dem durch den Kragen 11 der Muffe 3 gebildeten oberen Anschlag in der axialen Arbeitsrichtung des Bohrers 6 wegbewegt ist. Damit ist auch der Tastschalter 17 freigegeben, so dass die Saugzuggebläse 8 eingeschaltet sind. Die durch den Bohrer 6 bewirkte axiale Bewegung des Kolbenaggregats 7, das durch die axiale Führung 2a gegen Verdrehen gesichert ist, erfolgt entgegen der Kraft der Feder 13, die dadurch, wie oben ebenfalls schon erwähnt ist, gestaucht wird. Der aus einem in sich beweglichen Material bestehende Mantel 14 lässt diese Stauchung zu und bildet dabei ziehharmonikaartige Falten, wie in Figur 2 angedeutet ist. Nach Wegfall der vom Bohrer 6 ausgeübten Vorschubkraft wird das Kolbenaggregat 7, wie im Zusammenhang mit Figur 1 ebenfalls schon erwähnt ist, durch die Feder 13 zurückbewegt und an den durch den Kragen 11 gebildeten Anschlag angestellt, wodurch auch der Tastschalter 17 gedrückt und damit die Saugzuggebläse 8 abgeschaltet werden, so dass keine Energie verbraucht wird, solange der Bohrstaubsauger 1 nicht benutzt wird.

Das richtige Einlegen des Luftfilters 26 in die Schublade 27 der Ausführung gemäß Figuren 1 und 2 kann sich unter Umständen als schwierig erweisen. Um dem abzuhelfen, ist bei der Ausführung gemäß Figur 3 zum Halten des Luftfilters 26 ein an die Unterseite des Kolbenaggregats 7 lösbar ansetzbarer, topfförmiger Deckel 50 vorgesehen, der das Luftfilter 26 an die Unterseite des zweckmäßig durch einen Rost abgedeckten, lufteingangsseitigen Bereichs des Kolbenaggregats 7 anpresst. Der topfförmige Deckel 50 enthält einen dem Luftfilter 26 strömungsmäßig vorgeordneten Stauraum 51, der über in Figur 3 durch gestrichelte Linien angedeutete Strömungswege 52 mit dem gehäuseseitig vorgesehenen Raum oberhalb des in Figur 3 nicht dargestellten Bodens 4 des Gehäuses 2 kommuniziert, so dass der durch die von den Sauggebläsen 9 erzeugten Luftstrom herangeführte Bohrstaub in den Stauraum 51 gelangt und sich hier niederschlagen kann. Die Strömungswege 52 werden durch baulich vorgesehene Spalten zwischen dem das Kolbenaggregat 7 und den hieran angesetzten Deckel 50 durchgreifenden Bohrer 6 und einem eine Durchlassöffnung für den Bohrer bildenden Innenkragen 53 des Deckels 50 sowie zwischen der Stirnseite des Innenkragens 53 und der Unterseite des Kolbenaggregats 7 sowie zwischen dem Innenkragen 53 und einem diesen benachbarten, von der Unterseite des Kolbenaggregats 7 nach unten abstehenden Außenkragen 54 gebildet. Der Innenkragen 53 und der diesen umfassende Außenkragen 54 bilden praktisch ein Labyrinth, das ein Herausfallen des Bohrstaubs verhindert, sofern das Gehäuse 2 umgestürzt wird. Zur Verhinderung von von oben ansaugbarer Falschluft kann im unteren Bereich der dem Bohrer 6 zugeordneten Durchführöffnung des Kolbenaggregats 7 eine geeignete Dichtung 55 vorgesehen sein. Diese kann zweckmäßig als elastisch nachgiebige Lippendichtung etc. ausgebildet sein, die sich an unterschiedliche Bohrerdurchmesser anpassen kann.

Zur lösbaren Befestigung des Deckels 50 am Kolbenaggregat 7 kann eine Gewindeverbindung vorgesehen sein. Im in Figur 3 dargestellten Ausführungsbeispiel ist hierzu eine Magnethalterung vorgesehen, die zweckmäßig durch kolbenaggregatseitig und deckelseitig vorgesehene, einander anziehende Magnetringe 56, 57 gebildet wird. Die das Kolbenaggregat 7 elastisch abstützende Feder 13 ist auch bei der Ausführung gemäß Figur 3 erforderlich. Der die Feder 13 umfassende Mantel 14 kann hier zwar vorgesehen sein, ist jedoch nicht unbedingt erforderlich, da der Bohrstaub im Stauraum 51 aufgefangen wird. Zum Entleeren des Stauraums 51 kann dieser geöffnet und ausgeleert werden. Zweckmäßig kann aber auch hier wie bei den Ausführungen gemäß Figuren 1 und 2 eine Absaugung mittels eines an eine nach Entfernung des Bohrers 6 auf die Muffe 3 aufsetzbare, mit einer Öffnung 29a versehenen Verschlusskappe 29 ansetzbaren Staubsaugers erfolgen.

Vorstehend sind zwar bevorzugte Ausführungsbeispiele der Erfindung näher beschrieben. Diese ist hierauf jedoch nicht beschränkt.

## Patentansprüche

1. Bohrstaubsauger mit einem topfförmigen Gehäuse (2), durch das ein rotierend antreibbarer Bohrer (6) axial durchführbar ist, und mit einem im Gehäuse (2) axial verschiebbar angeordneten, mit einem bohrerseitigen Anschlag (18) zusammenwirkenden Kolbenaggregat (7), das eine Saugzuggebläseeinrichtung enthält und mittels einer von ihm übergriffenen Feder (13) an einen zugeordneten, gehäuseseitigen Anschlag (11) anstellbar ist, **dadurch gekennzeichnet, dass** im Kolbenagregat (7) wenigstens ein mit einem eigenen Antriebsmotor (8) versehenes Saugzuggebläse (9) und ein mit einer Ladebuchse (12) versehener und jedem ein zugehöriges Saugzuggebläse (9) antreibenden Antriebsmotor (8) zugeordneter Energiespeicher (10) vorgesehen sind.

2. Bohrstaubsauger nach Anspruch 1, **dadurch gekennzeichnet, dass** das Kolbenaggregat (7) eine dem bohrerseitigen Anschlag (18) zugeordnete, drehbar gelagerte Anlaufbuchse (19) aufweist.

3. Bohrstaubsauger nach einem der vorhergehenden Ansprüche, **dadurch gekennzeichnet, dass** das axial verschiebbar angeordnete Kolbenaggregat (7) durch eine axiale Führungseinrichtung (14) gegen Verdrehen gesichert ist.

4. Bohrstaubsauger nach einem der vorhergehenden Ansprüche, **dadurch gekennzeichnet, dass** jeder einem Saugzuggebläse (9) zugeordnete Antriebsmotor (8) und der vorzugsweise als Akku ausgebildete Energiespeicher (10) durch eine Steuereinrichtung miteinander gekoppelt sind, der ein von oben zugänglicher Tastschalter (17) zum Ein- und Ausschalten jedes Antriebsmotors (8) zugeordnet ist, der mit dem vorzugsweise als Kragen einer auf das Gehäuse (2) aufschraubbaren Kragenbüchse (3) ausgebildeten, gehäuseseitigen Anschlag (11) zusammenwirkt.

5. Bohrstaubsauger nach einem der vorhergehenden Ansprüche, **dadurch gekennzeichnet, dass** das Kolbenaggregat (7) mit jedem Saugzuggebläse (9) zugeordneten Ein- und Auslassöffnungen (23, 24) versehen ist, und dass einlassseitig ein Luftfilter (26) vorgesehen ist, das vorzugsweise durch einen an das Kolbenaggregat (7) von unten lösbar ansetzbaren topfartigen Deckel (50) in Anlage am lufteinlassseitigen Bereich des Kolbenaggregats (7) gehalten wird, wobei der Deckel (50) einen dem Luftfilter (26) vorgeordneten Stauraum (51) enthält, der über spaltförmige Strömungswege (52) mit dem Raum oberhalb des Bodens (4) des Gehäuses (2) kommuniziert.

6. Bohrstaubsauger nach einem der vorhergehenden Ansprüche, **dadurch gekennzeichnet, dass** die das Kolbenaggregat (7) abstützende Feder (13) als Zylinderfeder mit einem an den Innendurchmesser des Gehäuses (2) angepassten Außendurchmesser ausgebildet und vorzugsweise von einem aus einem in sich beweglichen, luftundurchlässigen Material bestehenden Mantel (14) umfasst ist und dass die Feder (13) mit Vorspannung zwischen der Unterseite des Kolbenaggregats (7) und der diesem gegenüberliegenden Innenseite des einen Ausgang (5) für den Bohrer (6) aufweisenden Bodens (4) des Gehäuses (2) angeordnet ist.

7. Bohrstaubsauger nach einem der vorhergehenden Ansprüche, **dadurch gekennzeichnet, dass** das Gehäuse (2) bodenseitig mit einer äußeren, einen zwischen zwei Peripheriebereichen durchgehenden Kanal bildenden Aussparung (4a) versehen ist.

8. Bohrstaubsauger nach einem der vorhergehenden Ansprüche, **dadurch gekennzeichnet, dass** im Bereich des dem Bohrer (6) zugeordneten Ausgangs (5) des Gehäusebodens (4) radiale Bohrstaubansaugkanäle (31) vorgesehen sind, wobei vorzugsweise eine in den Gehäuseboden (4) einschraubbare, mit einer zentralen, den dem Bohrer (6) zugeordneten Ausgang (5) bildenden Bohrung und hiervon abgehende, radiale Stichbohrungen zur Bildung der Bohrstaubansaugkanäle (31) versehene Buchse (30) vorgesehen ist.

9. Bohrstaubsauger nach einem der vorhergehenden Ansprüche, **dadurch gekennzeichnet, dass** das Gehäuse (2) lösbar auf einer zugeordneten Basiseinrichtung (33) aufnehmbar ist, die an der mit dem Bohrer (6) zu bearbeitenden Unterlage anbringbar ist und eine auf den Mittelpunkt (36) des zu bohrenden Lochs gerichtete, vorzugsweise als Laserstrahl (38) ausgebildete Justiereinrichtung aufweist.

10. Bohrstaubsauger nach Anspruch 9, **dadurch gekennzeichnet, dass** die Basiseinrichtung (33) mit einer Vakuumeinrichtung versehen und hiermit auf der zugeordneten Unterlage festsaugbar ist.

## Claims

1. Vacuum drill dust extractor having a pot-shaped housing (2) through which a rotatably drivable drill (6) can be passed axially, and having a piston unit (7) which is arranged axially displaceably in the housing (2), cooperates with a drill-side stop (18), contains an induced draft blower device and is settable against an associated stop (11) on the housing side by means of a spring (13) over which it engages, **characterized in that** at least one induced draft blower (9) provided with its own drive motor (8) and an energy storage unit (10) provided with a charging socket (12) and associated with each drive motor (8) driving an associated induced draft blower (9) are provided in the piston unit (7).

2. Vacuum drill dust extractor according to claim 1, **characterized in that** the piston unit (7) has a rotatably mounted thrust sleeve (19) associated with the drill-side stop (18).

3. Vacuum drill dust extractor according to one of the preceding claims, **characterized in that** the axially displaceably arranged piston unit (7) is secured against rotation by an axial guide device (14).

4. Vacuum drill dust extractor according to one of the preceding claims, **characterized in that** each drive motor (8) associated with an induced draft blower (9) and the energy storage unit (10), which is preferably in the form of a rechargeable battery, are coupled to one another by a control device which is assigned a pushbutton switch (17), which is accessible from above, for switching each drive motor (8) on and off, which pushbutton switch (17) interacts with the housing-side stop (11), which is preferably in the form of a collar of a collar sleeve (3) which can be screwed onto the housing (2).

5. Vacuum drill dust extractor according to one of the preceding claims, **characterized in that** the piston unit (7) is provided with inlet and outlet openings (23, 24) associated with each induced draft blower (9), and **in that** an air filter (26) is provided on the inlet side, which is held in contact with the air inlet-side region of the piston unit (7) by a pot-like cover (50) which can be detachably attached to the piston unit (7) from below, wherein the cover (50) contains a storage space (51) which is arranged upstream of the air filter (26) and communicates with the space above the base (4) of the housing (2) via gap-like flow paths (52).

6. Vacuum drill dust extractor according to one of the preceding claims, **characterized in that** the spring (13) supporting the piston unit (7) is designed as a cylindrical spring with an outer diameter adapted to the inner diameter of the housing (2) and is surrounded by a jacket (14) consisting of a material which is movable in itself and impermeable to air, and **in that** the spring (13) is arranged with pretension between the underside of the piston unit (7) and the inner side, opposite thereto, of the base (4) of the housing (2), which has an outlet (5) for the drill (6).

7. Vacuum drill dust extractor according to one of the preceding claims, **characterized in that** the housing (2) is provided on the bottom side with an outer recess (4a) forming a channel passing continuously between two peripheral regions.

8. Vacuum drill dust extractor according to one of the preceding claims, **characterized in that** radial drill dust suction channels (31) are provided in the region of the outlet (5) of the housing base (4) assigned to the drill (6), wherein a bushing (30) is provided which can be screwed into the housing base (4) and is provided with a central bore forming the outlet (5) assigned to the drill (6) and radial stub bores extending therefrom for forming the drill dust suction channels (31).

9. Vacuum drill dust extractor according to one of the preceding claims, **characterized in that** the housing (2) is detachably receivable on an associated base device (33) which is attachable to the support to be machined with the drill (6) and has an adjustment device in the form of a laser beam (38) directed towards the center point (36) of the hole to be drilled.

10. Vacuum drill dust extractor according to claim 9, **characterized in that** the base device (33) is provided with a vacuum device and can be fixed by means thereof to the associated base.

## Revendications

1. Aspirateur-perceuse avec un boîtier (2) en forme de pot, à travers lequel un foret (6) pouvant être entraîné en rotation peut être introduit axialement, et avec un ensemble de piston (7) disposé de manière déplaçable axialement dans le boîtier (2), coopérant avec une butée (18) côté foret, qui contient un dispositif de ventilateur de tirage par aspiration et peut être appliqué contre une butée (11) associée côté boîtier au moyen d'un ressort (13) qu'il recouvre, **caractérisé en ce que** sont prévus dans l'ensemble de piston (7) au moins un ventilateur de tirage par aspiration (9) pourvu de son propre moteur d'entraînement (8) et un accumulateur d'énergie (10) pourvu d'une prise de charge (12) et associé à chaque moteur d'entraînement (8) entraînant un ventilateur de tirage par aspiration (9) associé.

2. Aspirateur-perceuse selon la revendication 1, **caractérisé en ce que** l'ensemble de piston (7) présente une douille de butée (19) associée à la butée (18) côté foret et montée de manière rotative.

3. Aspirateur-perceuse selon l'une des revendications précédentes, **caractérisé en ce que** l'ensemble de piston (7) disposé de manière déplaçable axialement est bloqué contre la rotation par un dispositif de guidage axial (14).

4. Aspirateur-perceuse selon l'une des revendications précédentes, **caractérisé en ce que** chaque moteur d'entraînement (8) associé à un ventilateur de tirage par aspiration (9) et l'accumulateur d'énergie (10), réalisé de préférence sous la forme d'accumulateur électrique, sont couplés l'un à l'autre par un dispositif de commande auquel est associé un interrupteur à touche (17) accessible par le haut pour la mise en marche et la mise à l'arrêt de chaque moteur d'entraînement (8), qui coopère avec la butée (11) côté boîtier, réalisée de préférence sous la forme d'une collerette d'une douille à collerette (3) pouvant être vissée sur le boîtier (2).

5. Aspirateur-perceuse selon l'une des revendications précédentes, **caractérisé en ce que** l'ensemble de piston (7) est pourvu d'ouvertures d'entrée et de sortie (23, 24) associées à chaque ventilateur de tirage par aspiration (9), et **en ce qu'**un filtre à air (26) est prévu côté entrée, qui est maintenu de préférence par un couvercle (50) en forme de pot, pouvant être appliqué de manière amovible par le bas sur l'ensemble de piston (7), en appui sur la zone de l'ensemble de piston (7) située du côté de l'entrée d'air, le couvercle (50) contenant un espace de retenue (51) disposé en amont du filtre à air (26), qui communique par des voies d'écoulement (52) en forme de fentes avec l'espace situé au-dessus du fond (4) du boîtier (2).

6. Aspirateur-perceuse selon l'une des revendications précédentes, **caractérisé en ce que** le ressort (13) soutenant l'ensemble de piston (7) est conçu sous la forme d'un ressort cylindrique avec un diamètre extérieur adapté au diamètre intérieur du boîtier (2) et est de préférence entouré d'une chemise (14) constituée d'un matériau mobile en soi, imperméable à l'air, et **en ce que** le ressort (13) est disposé avec une précontrainte entre la face inférieure de l'ensemble de piston (7) et la face intérieure, opposée à celle-ci, du fond (4) du boîtier (2) présentant une sortie (5) pour le foret (6).

7. Aspirateur-perceuse selon l'une des revendications précédentes, **caractérisé en ce que** le boîtier (2) est pourvu, côté fond, d'un évidement (4a) extérieur formant un canal continu entre deux zones périphériques.

8. Aspirateur-perceuse selon l'une des revendications précédentes, **caractérisé en ce que** des canaux radiaux d'aspiration (31) de poussière de perçage sont prévus dans la zone de la sortie (5) du fond de boîtier (4) associée au foret (6), une douille (30) pouvant être vissée dans le fond de boîtier (4), pourvue d'un alésage central formant la sortie (5) associée au foret (6) et d'alésages radiaux percés partant de celui-ci, étant de préférence prévue pour former les canaux d'aspiration (31) de poussière de perçage.

9. Aspirateur-perceuse selon l'une des revendications précédentes, **caractérisé en ce que** le boîtier (2) peut être reçu de manière amovible sur un dispositif de base (33) associé qui peut être monté sur le support à travailler avec le foret (6) et présente un dispositif de réglage orienté vers le centre (36) du trou à percer, réalisé de préférence sous la forme d'un faisceau laser (38).

10. Aspirateur-perceuse selon la revendication 9, **caractérisé en ce que** le dispositif de base (33) est pourvu d'un dispositif à vide et peut être avec celui-ci fixé par aspiration sur le support associé.
